# EUROPÄISCHE PATENTANMELDUNG

(11) **EP 2 036 750 A2**
(43) Veröffentlichungstag der Anmeldung: **18.03.2009**
(21) Anmeldenummer: 08015653.2
(22) Anmeldetag: 04.09.2008
(51) Int. Cl.: B60J 1/20

(54) **Fensteranordnung für ein Kraftfahrzeug**

(30) Priorität: 07.09.2007 DE 102007042575
(71) Anmelder: REHAU AG + Co, 95111 Rehau (DE); RICHARD FRITZ GMBH + CO. KG, 74354 Besigheim (DE)
(72) Erfinder: Mett, Thomas, 95182 Döhlau (DE); Steeg, Claus-Christian, 08606 Oelsnitz (DE); Kiriakou, Wassilios, 74376 Gemmrigheim (DE); Haas, Jochen, 71691 Freiberg (DE)
(74) Vertreter: Grünecker, Kinkeldey, Stockmair & Schwanhäusser Anwaltssozietät

(57) **Zusammenfassung**

Die vorliegende Erfindung betrifft eine Fensteranordnung (1) für ein Kraftfahrzeug, umfassend: Eine Fensterscheibe (2) und je eine an beiden Seiten der Fensterscheibe angeordnete Blende (3), wobei die Blenden (3) und die Fensterscheibe (1) stoffschlüssig und/oder kraftschlüssig miteinander verbunden sind. Um die herkömmliche gattungsgemäße Fensteranordnung dahingehend zu verbessern, dass eine erleichterte Montage bei einem in optischer und ästhetischer Hinsicht verbesserten Erscheinungsbild bewerkstelligt werden kann, ist erfindungsgemäß vorgesehen, dass die Blenden (3) einteilig ausgebildet sind und einen mit der Fensterscheibe verbundenen Verbindungsabschnitt (131), einen mit einer Fahrzeugstruktur verbindbaren Befestigungsabschnitt (132) und einen sich zwischen dem Verbindungsabschnitt (131) und dem Befestigungsabschnitt (132) erstreckenden Hauptabschnitt (133) aufweisen, wobei der Querschnitt des Hauptabschnitts (133) bogenförmig verläuft, so dass die Blende (3) einen aerodynamisch günstigen Übergang zwischen einer seitlichen Verkleidung des Fahrzeugs und der Fensterscheibe bildet.

## Beschreibung

Die vorliegende Erfindung betrifft eine Fensteranordnung für ein Kraftfahrzeug gemäß dem Oberbegriff des Anspruchs 1.

Eine gattungsgemäße Fensteranordnung ist aus der Druckschrift DE 40 08 702 A1 bekannt. Diese Druckschrift offenbart eine Fensteranordnung mit einem Befestigungswinkel, der randseitig auf eine Scheibe aufgesteckt wird und der Halteteile zur Befestigung an einer Fahrzeugstruktur aufweist, und einen durch Umspritzung erzeugten Rahmen.

Der Erfindung liegt die Aufgabe zugrunde, die herkömmliche gattungsgemäße Fensteranordnung dahingehend zu verbessern, dass eine erleichterte Montage bei einem in optischer und ästhetischer Hinsicht verbesserten Erscheinungsbild bewerkstelligt werden kann.

Um die der Erfindung zugrunde gelegte Aufgabe zu lösen, stellt die Erfindung die Fensteranordnung für ein Kraftfahrzeug nach Anspruch 1 bereit. Die Blenden weisen funktional getrennte Profilabschnitte auf, die entsprechend ihrer jeweiligen Funktion optimal ausgelegt und gestaltet sind. Dabei können die Blenden einen in optischer und ästhetischer Hinsicht ansprechenden, aerodynamischen Übergang zwischen einer seitlichen Verkleidung des Fahrzeugs und der Fensterscheibe, die vorzugsweise als Heckscheibe des Fahrzeugs eingesetzt wird, bilden. Durch die erfindungsgemäßen Maßnahmen werden die Blenden und die Fensterscheibe ungeachtet der unvermeidlichen Formabweichungen der Fensterscheibe zu einer Vormontageeinheit verbunden, wobei ein in optischer und in ästhetischer Hinsicht herausragender, fließender Übergang an der Verbindungsstelle zwischen Fensterscheibe der Blende bewerkstelligt wird. Im Übrigen lässt sich die Vormontageeinheit unter Beibehaltung des herausragenden Erscheinungsbildes in einem einzigen Montageschritt - und damit wesentlich leichter als die herkömmliche Fensteranordnung - an der Fahrzeugstruktur anbringen.

Es kann sich als hilfreich erweisen, wenn die Blende an die Fensterscheibe angeformt, vorzugsweise angespritzt ist. Eine erhebliche Formabweichung der Fensterscheibe kann dadurch auf besonders komfortable Weise ausgeglichen werden und die Verbindungsstelle wird gleichzeitig abgedichtet.

Es kann sich als vorteilhaft erweisen, wenn die Blende an die Fensterscheibe angeklebt ist. Dadurch wird eine dauerfeste und dichte Verbindung zwischen Fensterscheibe und Blende bewerkstelligt.

Von Vorteil kann es sein, wenn die Blende auf die Fensterscheibe aufgesteckt ist. Dazu sind keine gesonderten Hilfsmittel erforderlich.

Zudem kann es sich als günstig erweisen, wenn eine Außenfläche der Fensterscheibe bündig in eine Außenfläche der Blende übergeht. Ein Übergang zwischen Fensterscheibe und Blende ist dann besonders formschön ausgebildet und bei Umströmung der Fensteranordnung entstehen keine Luftverwirbelungen an der Verbindungsstelle von Fensterscheibe und Blende.

Es erweist sich als günstig, wenn der Verbindungsabschnitt die Fensterscheibe randseitig umgreift, so dass sich zwei Schenkel des Verbindungsabschnitts auf gegenüber liegenden Seiten der Fensterscheibe entlang der Fensterscheibe erstrecken. Die Schenkel des Verbindungsabschnitts definieren dabei eine Aufnahme für einen randseitigen Abschnitt der Fensterscheibe. Die Einstecktiefe der Fensterscheibe in der Aufnahme wird je nach Abweichung der Fensterscheibe von der Normgröße variiert, um eine Formabweichung der Fensterscheibe auszugleichen.

Hilfreich kann es ebenfalls sein, wenn die Schenkel des Verbindungsabschnitts in etwa gleich lang sind. Dabei wird ein in optischer und ästhetischer Hinsicht besonders ansprechendes Ergebnis erzielt.

Vorteilhaft kann es sein, wenn ein Klebstoff in eine zwischen den Schenkeln des Verbindungsabschnitts ausgebildete Aufnahme eingebracht ist. Dadurch wird die Position der Fensterscheibe gegenüber der Blende fixiert (Lagesicherung), und zum anderen wird die Verbindungsstelle zwischen Fensterscheibe und Blende abgedichtet.

Es kann nützlich sein, wenn der Befestigungsabschnitt derart ausgebildet ist, dass er formschlüssig und/oder stoffschlüssig an der Fahrzeugstruktur festlegbar ist. Zur Montage der Blende an der Fahrzeugstruktur ist dann nur ein geringer Montageaufwand erforderlich.

Es kann praktisch sein, wenn der Befestigungsabschnitt ein federndes Befestigungsmittel aufweist, welches an der Fahrzeugstruktur verrastbar ist. Dadurch ist der Befestigungsabschnitt ohne gesonderte Hilfsmittel an der Fahrzeugstruktur festlegbar.

Es kann vorteilhaft sein, wenn der Befestigungsabschnitt derart ausgebildet und derart anordnungsbar ist, um die Fahrzeugstruktur formschlüssig zu hintergreifen. Diese Ausführung stellt eine weitere vorteilhafte Alternative dar, um den Befestigungsabschnitt mit geringem Montageaufwand und ohne gesonderte Hilfsmittel an der Fahrzeugstruktur festlegen zu können.

Vorteilhaft kann auch eine Fensteranordnung sein, bei der die Außenflächen des Verbindungsabschnittes und des Hauptabschnittes im Wesentlichen bündig ineinander übergehen. Bei Umströmung dieser Fensteranordnung werden keine oder nur geringe Luftverwirbelungen erzeugt.

Wirtschaftlich kann auch eine Fensteranordnung sein, bei der sich zwischen dem Verbindungsabschnitt und dem Hauptabschnitt ein Übergangsabschnitt erststreckt, der vorzugsweise parallel zur Fahrzeuglängsachse ausgerichtet ist. Dadurch wird der Luftwiderstand des Fahrzeuges verringert.

Besonders wirtschaftlich kann eine Fensteranordnung sein, bei der der Übergangsabschnitt in einem spitzen Winkel in den Hauptabschnitt der Blende übergeht und eine scharfe Abreißkante bildet. Diese Maßnahme verbessert die Aerodynamik des Fahrzeugs noch weiter, was sich auch unter dem Aspekt Kraftstoffverbrauch des Fahrzeugs positiv auswirkt.

Eine weitere Ausführung der Erfindung betrifft eine Anordnung für ein Kraftfahrzeug, umfassend eine Fensteranordnung und ein Fahrzeugstrukturteil, wobei die Fensterscheibe und das Fahrzeugstrukturteil stoffschlüssig verbunden sind, wobei die Blenden und das Fahrzeugstrukturteil formschlüssig und/oder stoffschlüssig verbunden sind. Diese Maßnahme hat den Vorteil, dass zur Anbindung der beschriebenen Anordnung an die Fahrzeugstruktur nur ein geringer Montageaufwand erforderlich ist und zugleich Formabweichungen der Fensterscheibe ausgeglichen werden.

Es kann von Vorteil sein, wenn die Fensterscheibe und ein Fahrzeugstrukturteil mit einem Klebstoff verklebt sind, wobei die Blende das Fahrzeugstrukturteil formschlüssig hintergreift und/oder die Blende und das Fahrzeugstrukturteil mit einem doppelseitigen Klebeband verbunden sind. Zur Anbindung der beschriebenen Anordnung an die Fahrzeugstruktur - bei Ausgleich von Formabweichungen der Fensterscheibe - ist nur ein besonders geringer Montageaufwand erforderlich.

Es kann sich als nützlich erweisen, wenn die Anordnung als Heckklappe für ein Kraftfahrzeug ausgebildet ist und zwei seitlich an der Fensterscheibe angeordnete Blenden umfasst, die stoffschlüssig und/oder kraftschlüssig mit der Fensterscheibe verbunden sind. Diese Anordnung ist leicht an eine Fahrzeugkarosserie anbindbar.

Es kann sich als praktisch erweisen, wenn die Blenden spiegelsymmetrisch ausgebildet und angeordnet sind. Diese Anordnung wirkt in optischer und ästhetischer Hinsicht besonders harmonisch.

Eine weitere Ausführung der Erfindung betrifft ein Verfahren zum Herstellen der Fensteranordnung für ein Kraftfahrzeug, umfassend die Schritte: Bereitstellen der Fensterscheibe; Anformen, Ankleben oder Aufstecken der Blende an bzw. auf die Fensterscheibe so dass die Blende und die Fensterscheibe stoffschlüssig und/oder kraftschlüssig verbunden sind. Diese Maßnahme hat die eingangs erwähnten Vorteile.

Es kann sich als vorteilhaft erweisen, wenn die Fensterscheibe vor dem Anformen der Blende lokal mit einem Primer beaufschlagt wird. Diese Maßnahme verbessert die Haftung zwischen Fensterscheibe und Blende.

Die bevorzugten Ausführungsbeispiele der vorliegenden Erfindung werden nachstehend mit Bezug auf die beiliegenden Zeichnungen beschrieben.
- Figur 1: zeigt eine Strukturzeichnung einer Fahrzeugheckklappe zur Festlegung des Verlaufs des Schnitts E-E.
- Figur 2: zeigt den Schnitt E-E aus Figur 1 zur Darstellung der erfindungsgemäßen Fensteranordnung gemäß dem ersten Ausführungsbeispiel.
- Figur 3: zeigt den Schnitt E-E aus Figur 1 zur Darstellung der erfindungsgemäßen Fensteranordnung gemäß dem zweiten Ausführungsbeispiel.
- Figur 4: zeigt den Schnitt E-E aus Figur 1 zur Darstellung der erfindungsgemäßen Fensteranordnung gemäß dem dritten Ausführungsbeispiel.
- Figur 5: zeigt den Schnitt E-E aus Figur 1 zur Darstellung der erfindungsgemäßen Fensteranordnung gemäß dem vierten Ausführungsbeispiel.
- Figur 6: zeigt den Schnitt E-E aus Figur 1 zur Darstellung der erfindungsgemäßen Fensteranordnung gemäß dem fünften Ausführungsbeispiel.
- Figur 7: zeigt den Schnitt E-E aus Figur 1 zur Darstellung der erfindungsgemäßen Fensteranordnung gemäß dem sechsten Ausführungsbeispiel.
- Figur 8: zeigt eine alternative Anbindung der Blende an die Fahrzeugstruktur.

### Detaillierte Beschreibung der bevorzugten Ausführungsbeispiele

Die gemeinsamen Merkmale aller Ausführungsbeispiele der Erfindung werden vorab erläutert, bevor auf die Besonderheiten der einzelnen Ausführungsbeispiele eingegangen wird.

Die Erfindung betrifft eine Fensteranordnung 1 für ein Kraftfahrzeug, umfassend: Eine Fensterscheibe 2 und je eine an beiden Seiten an der Fensterscheibe 2 angeordnete Blende 3. Erfindungsgemäß sind die Blende 3 und die Fensterscheibe 2 stoffschlüssig und/oder kraftschlüssig miteinander verbunden. Dabei ist die Blende 3 vorzugsweise an die Fensterscheibe 2 angeformt, bevorzugt angespritzt, oder angeklebt oder auf die Fensterscheibe 2 aufgesteckt.

Die Fensterscheibe 2 ist vorzugsweise aus Glas oder Kunststoff hergestellt. Die bevorzugte Dicke der Fensterscheibe 2 beträgt ca. 3 mm bis 5 mm. Bei der Herstellung der Fensterscheibe 2 beträgt die Fertigungstoleranz ca. 2 mm in der Erstreckungsebene der Fensterscheibe 2.

Die Blende 3 ist einteilig gefertigt und weist einen mit der Fensterscheibe 2 verbundenen Verbindungsabschnitt 131, einen mit einer Fahrzeugstruktur 5 verbindbaren Befestigungsabschnitt 132 und einen sich zwischen dem Verbindungsabschnitt 131 und dem Befestigungsabschnitt 132 erstreckenden Hauptabschnitt 133 auf.

Der Verbindungsabschnitt 131 dient der Anbindung der Fensterscheibe 2 an die Blende 3 und ist in drei unterschiedlichen Varianten ausführbar.

Der Befestigungsabschnitt 132 dient der Anbindung der Blende 3 an die Fahrzeugstruktur 5 und ist ebenfalls in drei unterschiedlichen Varianten ausführbar. Dabei ist der Befestigungsabschnitt 132 vorzugsweise derart ausgebildet, dass er formschlüssig und/oder stoffschlüssig an der Fahrzeugstruktur 5 festlegbar ist. Dabei ist der Befestigungsabschnitt 132 derart ausgebildet, dass die Blende 3 an der Fahrzeugstruktur 5 verklemmt, verklipst, verklebt oder verschraubt werden kann. Daneben sind alle weiteren gängigen Befestigungsmethoden geeignet.

Der Hauptabschnitt 133, der den Verbindungsabschnitt 131 und den Befestigungsabschnitt 132 verbindet, weist - im Querschnitt gesehen - eine Krümmung auf, die vorzugsweise ein Bogensegment (ca. 30°-60° Bogenlänge) beschreibt. Der Hauptabschnitt 133 ist in zwei unterschiedlichen Varianten ausführbar und dabei mit unterschiedlichen Funktionen belegt.

Die beanspruchte und beschriebene Fensteranordnung 1 ist Bestandteil einer Anordnung für ein Kraftfahrzeug, die insbesondere als Fahrzeugheckklappe ausgebildet ist. Diese Anordnung umfasst die besagte Fensteranordnung und ein Fahrzeugstrukturteil 5. Die Fensterscheibe 2 und das Fahrzeugstrukturteil 5 sind dabei stoffschlüssig verbunden, und die Blende 3 und das Fahrzeugstrukturteil 5 sind formschlüssig und/oder stoffschlüssig verbunden. Insbesondere sind die Fensterscheibe 2 und das Fahrzeugstrukturteil 5 mittels einer Klebstoffraupe 6 verklebt, während die Blende 3 das Fahrzeugstrukturteil 5 formschlüssig hintergreift und/oder die Blende 3 und das Fahrzeugstrukturteil 5 entweder mit einem doppelseitigen Klebeband verbunden sind oder verschraubt sind.

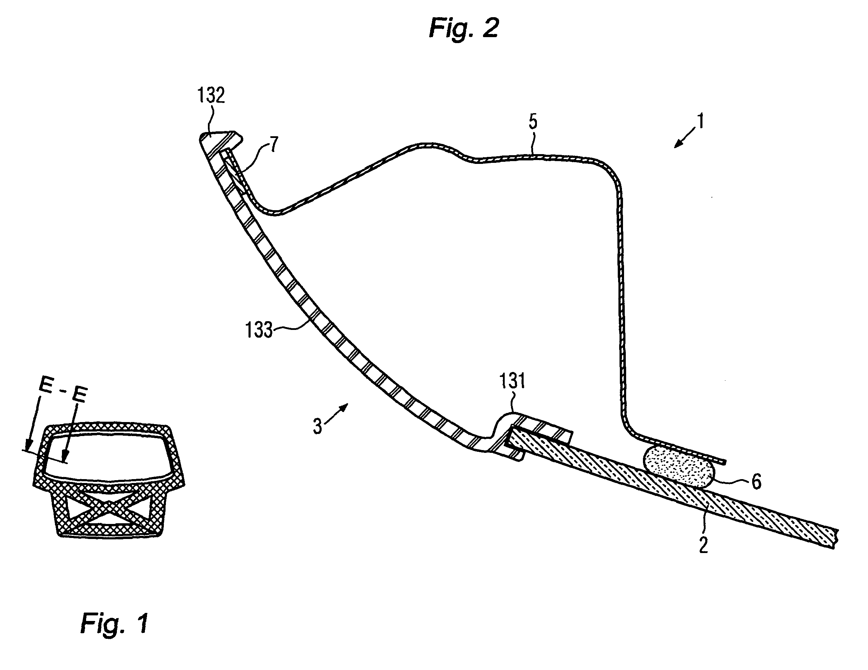

Die Fahrzeugstruktur bzw. das Fahrzeugstrukturteil 5 bildet den Rahmen der in Figur 1 dargestellten Heckklappe, die gelenkig über ein Scharnier an der Karosserie eines Fahrzeugs schwenkbar befestigt ist.

Bei der als Heckklappe für ein Kraftfahrzeug ausgebildeten Anordnung ist je eine Blende 3 an jeder Seite der Fensterscheibe 2 angeordnet und in der zuvor beschriebenen Art und Weise stoffschlüssig und/oder kraftschlüssig mit der Fensterscheibe 2 verbunden. Die beiden Blenden 3 sind in diesem Fall spiegelsymmetrisch ausgebildet und angeordnet.

### Erstes Ausführungsbeispiel

Ein erstes Ausführungsbeispiel der Erfindung wird nachstehend mit Bezug auf die Fig. 1 und 2 beschrieben.

Das erste Ausführungsbeispiel der Erfindung umfasst einen Verbindungsabschnitt 131 der ersten Variante, einen Befestigungsabschnitt 132 der ersten Variante sowie einen Hauptabschnitt 133 der ersten Variante.

Die erste Variante des Verbindungsabschnitts 131 betrifft die angespritzte Variante. Dabei ist die Blende 3 seitlich an die Fensterscheibe angespritzt, so dass der Verbindungsabschnitt 131 die Fensterscheibe 2 randseitig umgreift, so dass sich zwei Schenkel des Verbindungsabschnitts 131 auf gegenüber liegenden Seiten der Fensterscheibe 2 entlang der Fensterscheibe 2 erstrecken. Die Schenkel des Verbindungsabschnitts 131 sind in der dargestellten Ausführung unterschiedlich lang, wobei der einem Fahrzeuginnenraum zuzuwendende Schenkel länger ausgeführt ist (z.B. 70 mm Überlappung mit der Fensterscheibe 2) als der auf einer Außenseite des Fahrzeugs anzuordnende Schenkel (z.B. 30 mm Überlappung mit der Fensterscheibe 2). Die Ausgestaltung und insbesondere die Länge der Schenkel kann je nach der verwendeten Spritzgussform unterschiedlich ausfallen.

Die erste Variante des Befestigungsabschnitts 132 weist an einer einem Fahrzeuginnenraum zuzuwendenden Seite ein angeformtes, federndes Befestigungsmittel mit einer Rastnase auf, welches an der Fahrzeugstruktur 5 verrastbar ist. Die Rastnase des federnden Befestigungsmittels ist durch Ausübung von Druck auf den Befestigungsabschnitt 132 gegenüber der Fahrzeugstruktur 5 auslenkbar.

Die erste Variante des Hauptabschnitts 133 ist derart ausgebildet, dass die Außenflächen des Verbindungsabschnitts 131 und des Hauptabschnittes 133 im Wesentlichen bündig ineinander übergehen. Dies sorgt für eine in optischer und ästhetischer Hinsicht ansprechende Anbindung der Blende 3 an die Fensterscheibe 2. Der Hauptabschnitt 133 beschreibt im Querschnitt ein Bogensegment mit einer Bogenlänge von ca. 30° bis 60°.

Ein Verfahren zur Herstellung der Fensteranordnung 1 gemäß dem ersten Ausführungsbeispiel der Erfindung wird nachstehend erläutert:
Eine Fensterscheibe 2 wird bereitgestellt. Vor dem Anspritzen der Blende 3 wird ein randseitiger Bereich der Fensterscheibe 2, an welchem die Blende 3 anzuformen ist, lokal mit einem Primer bzw. Haftvermittler versehen, um die Haftung zwischen der Fensterscheibe 2 und der Blende 2 zu verbessern. Der Primer ist symbolisch durch eine gestrichelte Linie dargestellt. Die vorbehandelte Fensterscheibe 2 wird in eine Spritzgussform eingelegt und die Spritzgussform wird geschlossen. Anschließend wird ein im Spritzgussverfahren verarbeitbarer Kunststoff in die Spritzgussform eingespritzt und ausgehärtet. Dabei wird die Blende 3 an die Fensterscheibe 2 angeformt bzw. angespritzt, so dass die Blende 3 und die Fensterscheibe 2 stoffschlüssig verbunden sind.
Nach dem Anformen der Blende 3 wird die Fensteranordnung 1 an der Fahrzeugstruktur 5 festgelegt. Die Fensterscheibe 2 wird mittels einer Klebstoffraupe 6 an der Fahrzeugstruktur 5 verklebt, d.h. stoffschlüssig mit der Fahrzeugstruktur 5 verbunden.
Die Blende 3 wird durch Ausüben von Druck auf den Befestigungsabschnitt 132 an der Fahrzeugstruktur 5 verrastet bzw. eingeclipst, so dass die Blende 3 und die Fahrzeugstruktur 5 formschlüssig verbunden sind. Nach dem Überwinden einer Rastkante der Fahrzeugstruktur 5 rastet die Federnase des Befestigungsmittels in einer entsprechenden Stellung ein, um die Fahrzeugstruktur 5 formschlüssig zu hintergreifen, wie in Fig. 2 dargestellt ist. Zusätzlich ist der Befestigungsabschnitt 132 der Blende 3 über ein doppelseitiges Klebeband 7 mit der Fahrzeugstruktur 5 verklebt, so dass die Blende 3 und die Fahrzeugstruktur 5 stoffschlüssig verbunden sind. Das doppelseitige Klebeband wird vorab an einer der zu verbindenden Flächen des Befestigungsabschnitt 32 und/oder der Fahrzeugstruktur 5 angebracht.

### Zweites Ausführungsbeispiel

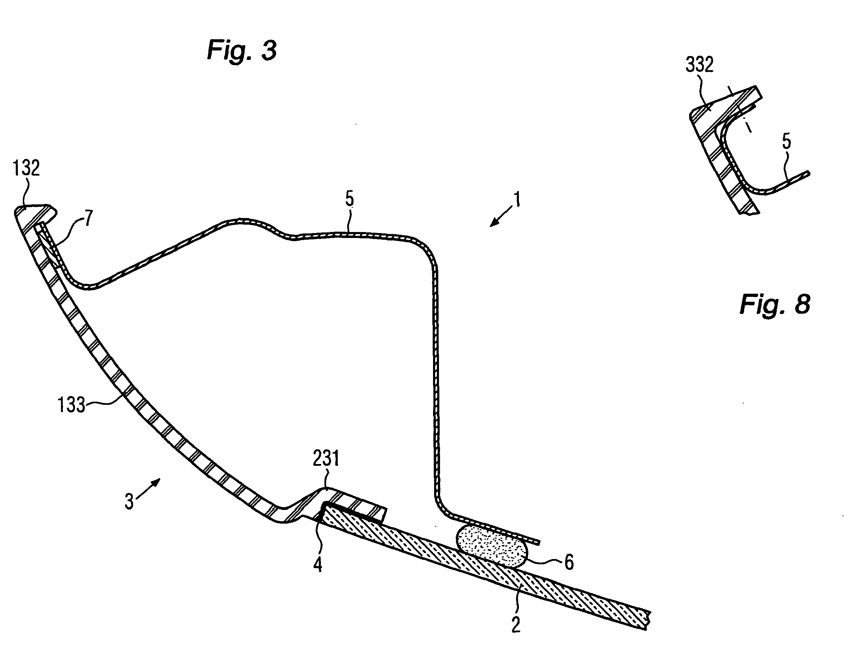

Ein zweites Ausführungsbeispiel der Erfindung wird nachstehend mit Bezug auf die Fig. 1 und 3 beschrieben.

Das zweite Ausführungsbeispiel der Erfindung umfasst einen Verbindungsabschnitt 231 der zweiten Variante, einen Befestigungsabschnitt 132 der ersten Variante sowie einen Hauptabschnitt 133 der ersten Variante.

Die zweite Variante des Verbindungsabschnitts 231 betrifft die angeklebte Variante. Dabei wird eine vorgefertigt Blende 3 aus Kunststoff (Spritzgussformteil) oder Metall an der Fensterscheibe 2 vorzugsweise mittels eines Klebstoffes verklebt, bzw. stoffschlüssig mit der Fensterscheibe 2 verbunden. Dabei ist die Blende 3 seitlich an die Fensterscheibe angeklebt und derart ausgebildet, dass sich ein Schenkel des Verbindungsabschnitts 231 auf einer einem Fahrzeuginnenraum zuzuwendenden Seite der Fensterscheibe 2 entlang der Fensterscheibe 2 erstreckt und die Außenfläche der Fensterscheibe 2 bündig in die Außenfläche der Blende 3 übergeht.

Das Verfahren zum Herstellen der erfindungsgemäßen Fensteranordnung 1 gemäß dem zweiten Ausführungsbeispiel umfasst die folgenden Schritte: Bereitstellen der Fensterscheibe 2, Bereitstellen der Blende 3, so dass die Blende 3 randseitig an der Fensterscheibe 2 angeordnet ist, Auftragen eines Klebstoffes 4 als Klebstoffschicht auf einer oder beiden der zu verbindenden Flächen der Blende 3 und der Fensterscheibe 2 und Zusammenfügen und Aneinanderdrücken der zu verbindenden Flächen der Blende 3 und der Fensterscheibe 2, so dass die Blende 3 und die Fensterscheibe 2 stoffschlüssig verbunden sind.

Nach dem Herstellen der Fensteranordnung 1 wird die Fensteranordnung 1 an der Fahrzeugstruktur 5 in der oben beschriebenen Art und Weise festgelegt. Die Fensterscheibe 2 und die Blende 3 werden stoffschlüssig verbunden, vorzugsweise mittels der Klebstoffraupe 6 verklebt, wobei die Blende 3 und die Fahrzeugstruktur 5 form- und stoffschlüssig verbunden werden.

### Drittes Ausführungsbeispiel

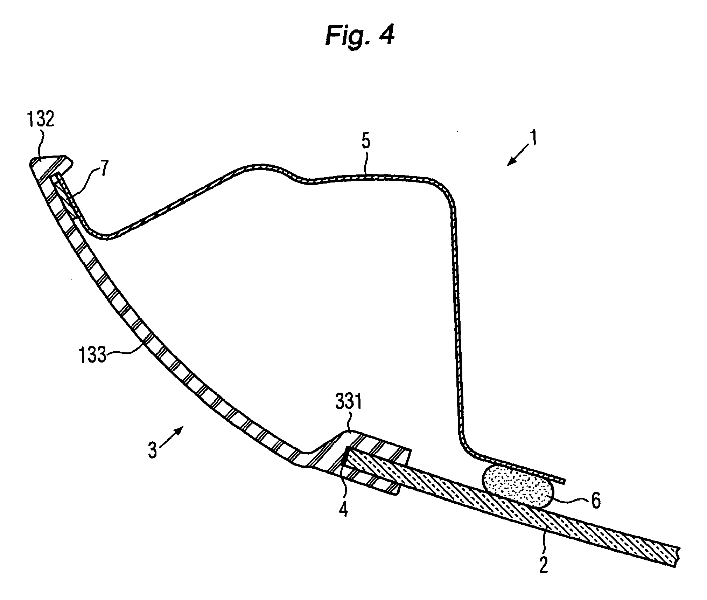

Ein drittes Ausführungsbeispiel der Erfindung wird nachstehend mit Bezug auf die Fig. 1 und 4 beschrieben.

Das dritte Ausführungsbeispiel der Erfindung umfasst einen Verbindungsabschnitt 331 der dritten Variante, einen Befestigungsabschnitt 132 der ersten Variante sowie einen Hauptabschnitt 133 der ersten Variante.

Die dritte Variante des Verbindungsabschnitts 331 betrifft die aufgesteckte Variante. Dabei wird eine vorgefertigte Blende 3 aus Kunststoff (Spritzgussformteil) oder Metall randseitig auf die Fensterscheibe 2 aufgesteckt, so dass der Verbindungsabschnitt 331 die Fensterscheibe 2 randseitig umgreift, wobei sich zwei Schenkel des Verbindungsabschnitts 331 auf gegenüber liegenden Seiten der Fensterscheibe 2 entlang der Fensterscheibe 2 erstrecken und die Fensterscheibe 2 von den Schenkeln festgeklemmt wird, so dass die Blende 3 und die Fensterscheibe 2 kraftschlüssig verbunden sind. Die Schenkel des Verbindungsabschnitts 331 sind in der dargestellten Ausführung gleich lang (z.B. 70 mm Überlappung mit der Fensterscheibe 2) und bilden eine Aufstecknut, wobei der einem Fahrzeuginnenraum zuzuwendende Schenkel etwas dicker ausgeführt ist als der auf einer Außenseite des Fahrzeugs anzuordnende Schenkel. Die Ausgestaltung und insbesondere die Länge der Schenkel kann allerdings auch anders als beschrieben ausfallen. Ein Klebstoff, vorzugsweise ein Flüssigklebstoff, ist in die zwischen den Schenkeln des Verbindungsabschnitts 331 ausgebildete Aufnahme bzw. Aufstecknut auf den Nutgrund eingebracht (stirnseitig der Fensterscheibe 2 dargestellt), so dass die Fensterscheibe 2 und die Blende 3 zusätzlich auch stoffschlüssig verbunden sind.

Das Verfahren zum Herstellen der erfindungsgemäßen Fensteranordnung 1 gemäß dem dritten Ausführungsbeispiel umfasst die folgenden Schritte: Bereitstellen der Fensterscheibe 2; Bereitstellen der Blende 3; Einbringen eines flüssigen Klebstoffs 4 in die zwischen den zwei Schenkeln des Verbindungsabschnitts 331 definierte Aufnahme (Aufstecknut); Aufstecken der Blende 3, so dass der Verbindungsabschnitt 331 die Fensterscheibe 2 randseitig umgreift und sich die zwei Schenkel des Verbindungsabschnitts 331 auf gegenüber liegenden Seiten der Fensterscheibe 2 entlang der Fensterscheibe 2 erstrecken und die Fensterscheibe 2 von den Schenkeln festgeklemmt wird; und Aushärten des Klebstoffs 4, um die Fensterscheibe 2 und die Blende 3 durch den Klebstoff 4 stoffschlüssig zu verbinden.

Alternativ wird der Klebstoff 4 auf der Stirnseite der Fensterscheibe 2 aufgetragen. Anschließend werden die Blende 3 und die Fensterscheibe 2 zusammengefügt, so dass die Blende 3 und die Fensterscheibe 2 stoffschlüssig verbunden sind.

Nach dem Herstellen der Fensteranordnung 1 wird die Fensteranordnung 1 an der Fahrzeugstruktur 5 in der oben beschriebenen Art und Weise festgelegt. Die Fensterscheibe 2 und die Blende 3 werden stoffschlüssig verbunden, vorzugsweise mittels der Klebstoffraupe 6 verklebt, wobei die Blende 3 und die Fahrzeugstruktur 5 form- und stoffschlüssig verbunden werden.

### Viertes Ausführungsbeispiel

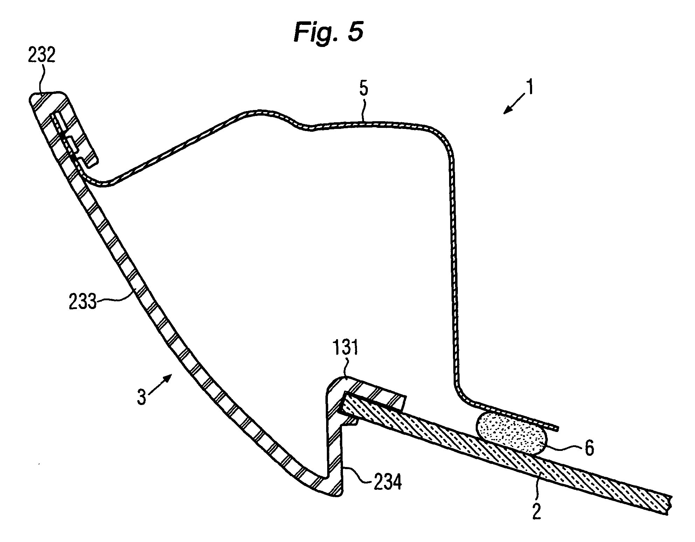

Ein viertes Ausführungsbeispiel der Erfindung wird nachstehend mit Bezug auf die Fig. 1 und 5 beschrieben.

Das vierte Ausführungsbeispiel der Erfindung umfasst einen Verbindungsabschnitt 131 der ersten Variante, einen Befestigungsabschnitt 232 der zweiten Variante sowie einen Hauptabschnitt 233 der zweiten Variante.

Der Befestigungsabschnitt 232 der zweiten Variante ist derart ausgebildet und derart anordnungsbar, um die Fahrzeugstruktur 5 formschlüssig zu hintergreifen. Dabei hintergreift der Befestigungsabschnitt 232 die Fahrzeugstruktur 5 randseitig, wobei sich ein Schenkel des Befestigungsabschnitts 232 auf einer dem Fahrzeuginnenraum zuzuwendenden Seite der Fahrzeugstruktur 5 entlang der Fahrzeugstruktur 5 erstreckt und die Fahrzeugstruktur 5 von an den Schenkeln angeformten Vorsprüngen des Befestigungsabschnitts 232 in Vertiefungen bzw. Aussparungen der Fahrzeugstruktur 5 festgehalten wird, so dass so dass die Blende 3 und die Fahrzeugstruktur 5 formschlüssig verbunden sind.

Der Hauptabschnitt 233 der zweiten Variante ist derart ausgebildet, dass sich zwischen dem Verbindungsabschnitt 131 und dem Hauptabschnitt 233 ein Übergangsabschnitt 234 erststreckt, der vorzugsweise parallel zur Fahrzeuglängsachse ausgerichtet ist. Der Übergangsabschnitt geht in einem spitzen Winkel in den Hauptabschnitt der Blende über und bildet eine scharfe Abreißkante.

Die Fensteranordnung 1 wird in der oben beschriebenen Art und Weise hergestellt und an der Fahrzeugstruktur 5 festgelegt.

### Fünftes Ausführungsbeispiel

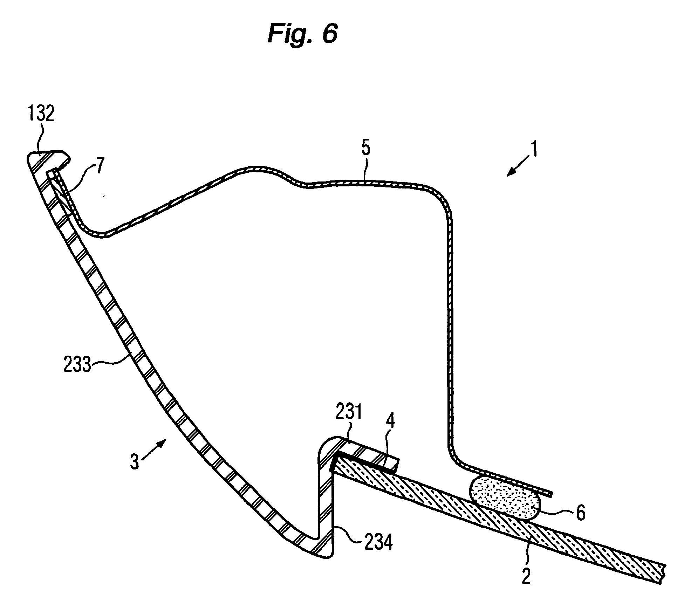

Ein fünftes Ausführungsbeispiel der Erfindung wird nachstehend mit Bezug auf die Fig. 1 und 6 beschrieben.

Das fünfte Ausführungsbeispiel der Erfindung umfasst einen Verbindungsabschnitt 231 der zweiten Variante, einen Befestigungsabschnitt 132 der ersten Variante, einen Hauptabschnitt 233 der zweiten Variante sowie einen Übergangsabschnitt 234 der zweiten Variante.

Die Fensteranordnung 1 wird in der oben beschriebenen Art und Weise hergestellt und an der Fahrzeugstruktur 5 festgelegt.

### Sechstes Ausführungsbeispiel

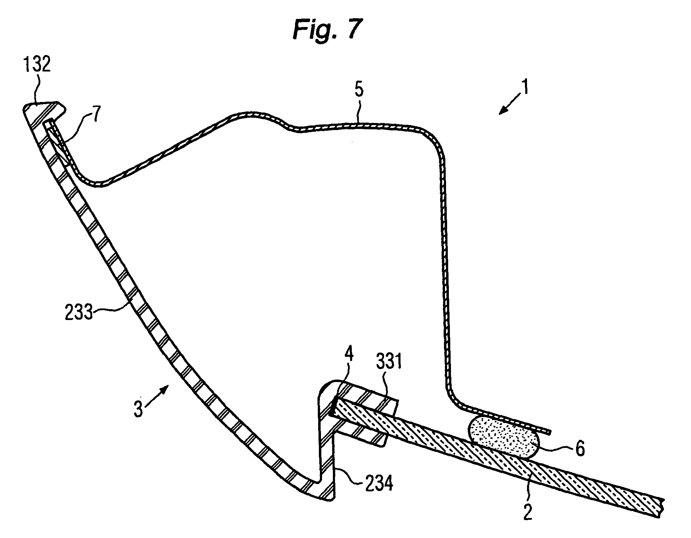

Ein sechstes Ausführungsbeispiel der Erfindung wird nachstehend mit Bezug auf die Fig. 1 und 7 beschrieben.

Das sechste Ausführungsbeispiel der Erfindung umfasst einen Verbindungsabschnitt 331 der dritten Variante, einen Befestigungsabschnitt 132 der ersten Variante einen Hauptabschnitt 233 der zweiten Variante sowie einen Übergangsabschnitt 234 der zweiten Variante.

Ein Befestigungsabschnitt 332 der dritten Variante wird mit Bezug auf Fig. 8 erläutert. Der Befestigungsabschnitt 332 der dritten Variante bildet einen Flansch und erstreckt sich im Wesentlichen rechtwinklig zum Hauptabschnitt 233. Der Befestigungsabschnitt 332 ist zur Innenseite des Fahrzeugs ausrichtbar. Das Fahrzeugstrukturteil 5 weist in dem mit der Blende 3 zu verbindenden Bereich eine im Wesentlichen auf die Blende 3 abgestimmte Form bzw. Kontur auf und ist gleichzeitig mit dem Befestigungsabschnitt 332 und dem Hauptabschnitt 233 flächig in Anlage bringbar. Das Fahrzeugstrukturteil 5 ist mit dem Befestigungsabschnitt 332 verschraubt oder vernietet, so dass die Blende 3 und die Fahrzeugstruktur 5 formschlüssig verbunden sind.

Die Fensteranordnung 1 wird in der oben beschriebenen Art und Weise hergestellt und an der Fahrzeugstruktur 5 festgelegt.

Die unterschiedlichen Varianten des Verbindungsabschnitts 131, 231, 331, des Befestigungsabschnitts 132, 232, 332 und des Hauptabschnitts 133, 233 können beliebig kombiniert werden.

## Patentansprüche

1. Fensteranordnung (1) für ein Kraftfahrzeug, umfassend: Eine Fensterscheibe (2) und je eine an beiden Seiten an der Fensterscheibe (2) angeordnete Blende (3), wobei die Blenden (3) und die Fensterscheibe (2) stoffschlüssig und/oder kraftschlüssig miteinander verbunden sind, **dadurch gekennzeichnet, dass** die Blenden (3) einteilig ausgebildet sind und einen mit der Fensterscheibe (2) verbundenen Verbindungsabschnitt (131), einen mit einer Fahrzeugstruktur (5) verbindbaren Befestigungsabschnitt (132) und einen sich zwischen dem Verbindungsabschnitt (131) und dem Befestigungsabschnitt (132) erstreckenden Hauptabschnitt (133) aufweisen, wobei der Querschnitt des Hauptabschnitts (133, 233) bogenförmig verläuft, so dass die Blende (3) einen aerodynamisch günstigen Übergang zwischen einer seitlichen Verkleidung des Fahrzeugs und der Fensterscheibe (2) bildet.

2. Fensteranordnung (1) nach Anspruch 1, wobei die Blende (3) an die Fensterscheibe (2) angeformt, vorzugsweise angespritzt ist.

3. Fensteranordnung (1) nach Anspruch 1, wobei die Blende (3) an die Fensterscheibe (2) angeklebt ist.

4. Fensteranordnung (1) nach Anspruch 1, wobei die Blende (3) auf die Fensterscheibe (2) aufgesteckt ist.

5. Fensteranordnung (1) nach einem der vorangegangenen Ansprüche, wobei die Außenfläche der Fensterscheibe (2) bündig in die Außenfläche der Blende (3) übergeht.

6. Fensteranordnung (1) nach Anspruch 1, wobei der Verbindungsabschnitt (131) die Fensterscheibe (2) randseitig umgreift, so dass sich zwei Schenkel des Verbindungsabschnitts (131) auf gegenüber liegenden Seiten der Fensterscheibe (2) entlang der Fensterscheibe (2) erstrecken.

7. Fensteranordnung (1) nach Anspruch 6, wobei die Schenkel des Verbindungsabschnitts (131) in etwa gleich lang sind.

8. Fensteranordnung (1) nach Anspruch 6 oder 7, wobei ein Klebstoff in eine zwischen den Schenkeln des Verbindungsabschnitts (331) ausgebildete Aufnahme eingebracht ist.

9. Fensteranordnung (1) nach einem der vorangegangenen Ansprüche, wobei der Befestigungsabschnitt (132, 232) derart ausgebildet ist, dass er formschlüssig und/oder stoffschlüssig an der Fahrzeugstruktur (5) festlegbar ist.

10. Fensteranordnung (1) nach Anspruch 9, wobei der Befestigungsabschnitt (132, 232) ein federndes Befestigungsmittel aufweist, welches an der Fahrzeugstruktur (5) verrastbar ist.

11. Fensteranordnung (1) nach Anspruch 9, wobei der Befestigungsabschnitt (132, 232) derart ausgebildet und derart anordnungsbar ist, um die Fahrzeugstruktur (5) formschlüssig zu hintergreifen.

12. Fensteranordnung (1) nach einem der vorangegangenen Ansprüche, wobei die Außenfläche des Verbindungsabschnittes (131) und des Hauptabschnittes (133) im Wesentlichen bündig ineinander übergehen.

13. Fensteranordnung (1) nach einem der vorangegangenen Ansprüche, wobei sich zwischen dem Verbindungsabschnitt (131) und dem Hauptabschnitt (233) ein Übergangsabschnitt (234) erstreckt, der vorzugsweise parallel zur Fahrzeuglängsachse ausgerichtet ist.

14. Fensteranordnung (1) nach Anspruch 13, wobei der Übergangsabschnitt (234) in einem spitzen Winkel in den Hauptabschnitt (233) der Blende (3) übergeht und eine Abreißkante bildet.

15. Anordnung für ein Kraftfahrzeug, umfassend eine Fensteranordnung (1) nach einem der vorangegangenen Ansprüche und ein Fahrzeugstrukturteil (5), wobei die Fensterscheibe (2) und das Fahrzeugstrukturteil (5) stoffschlüssig verbunden sind, und wobei die Blenden (3) und das Fahrzeugstrukturteil (5) formschlüssig und/oder stoffschlüssig verbunden sind.

16. Anordnung für ein Kraftfahrzeug nach Anspruch 15, wobei die Fensterscheibe (2) und ein Fahrzeugstrukturteil (5) mit einem Klebstoff verklebt sind, und wobei die Blende (3) das Fahrzeugstrukturteil (5) formschlüssig hintergreift und/oder die Blende (3) und das Fahrzeugstrukturteil (5) mit einem doppelseitigen Klebeband verbunden sind.

17. Anordnung nach Anspruch 15 oder 16, wobei die Anordnung als Heckklappe für ein Kraftfahrzeug ausgebildet ist und zwei seitlich an der Fensterscheibe (2) angeordnete Blenden (3) umfasst, die stoffschlüssig und/oder kraftschlüssig mit der Fensterscheibe (2) verbunden sind.

18. Anordnung nach einem der Ansprüche 15 bis 17, wobei die Blenden (3) spiegelsymmetrisch ausgebildet und angeordnet sind.

19. Verfahren zum Herstellen der Fensteranordnung (1) für ein Kraftfahrzeug nach einem der Ansprüche 1 bis 14, umfassend die Schritte: Bereitstellen der Fensterscheibe (2); Anformen, Ankleben oder Aufstecken der Blenden (3) an bzw. auf die Fensterscheibe (2) so dass die Blenden (3) und die Fensterscheibe (2) stoffschlüssig und/oder kraftschlüssig verbunden sind.

20. Verfahren nach Anspruch 19, wobei die Fensterscheibe (2) vor dem Anformen der Blenden (3) lokal mit einem Primer versehen wird.
